Europäisches Patentamt

European Patent Office

Office européen des brevets

(11) Publication number: **0 038 083**
**B1**

# EUROPEAN PATENT SPECIFICATION

(45) Date of publication of patent specification: **30.07.86**

(51) Int. Cl.⁴: **B 60 K 41/26**

(21) Application number: **81102908.1**

(22) Date of filing: **15.04.81**

(54) **Electronic control for automatic transmission.**

(30) Priority: **15.04.80 JP 50141/80**

(43) Date of publication of application:
**21.10.81 Bulletin 81/42**

(45) Publication of the grant of the patent:
**30.07.86 Bulletin 86/31**

(84) Designated Contracting States:
**DE FR GB**

(56) References cited:
**DE-A-2 815 273**
**US-A-3 683 720**
**US-A-3 690 197**

(73) Proprietor: **NIPPONDENSO CO., LTD.**
**1, 1-chome, Showa-cho**
**Kariya-shi Aichi-ken (JP)**
(73) Proprietor: **NIPPON SOKEN, INC.**
**14, Iwaya Shimohasumi-cho**
**Nishio-shi Aichi-Ken (JP)**

(72) Inventor: **Takakuwa, Eiji**
**19, Aza Takeshita Kamimutsuna-cho**
**Okazaki-shi Aichi-ken (JP)**
Inventor: **Kawai, Hisasi**
**14-1, Nishihashira-cho**
**Toyohashi-shi Aichi-ken (JP)**
Inventor: **Kida, Masashi**
**1-1, Aza Sameda Nakajima-cho**
**Okazaki-shi Aichi-ken (JP)**
Inventor: **Kato, Takaaki**
**19, Maeshiba-cho**
**Toyohashi-shi Aichi-ken (JP)**

(74) Representative: **Klingseisen, Franz, Dipl.-Ing.**
**et al**
**Dr. F. Zumstein sen. Dr. E. Assmann Dr. R.**
**Koenigsberger Dr. F. Zumstein jun. Dipl.-Ing. F.**
**Klingseisen Bräuhausstrasse 4**
**D-8000 München 2 (DE)**

Courier Press, Leamington Spa, England.

## Description

The invention relates to an automatic transmission system for a vehicle according to the preamble of claim 1.

In conventional automatic transmission systems for automobiles, the speed of the vehicle and the throttle opening of the vehicle engine are detected to select one of predetermined speed change modes, the selected speed mode being used to operate the clutch and break means of the change gear unit. When engine braking is needed, the shift lever is manually operated to a low or medium speed gear. An automatic system has been proposed to substitute for a portion of this manual operation. This involves the use of a brake sensor for detecting a rapid operation of the brake pedal and a downhill sensor for detecting a downhill drive to shift the clutches and brake means to engine braking mode. However, this proposed prior art system is not capable of providing an appropriate characteristic of engine braking for varying vehicle operating conditions since there is only one engine brake mode which is merely brought into operation on an On-Off control basis.

It is therefore the object of the present invention to provide an automatic transmission system which effects engine braking of different operating characteristics depending on the operating condition of the automotive vehicle.

This is achieved by the features in the characterizing part of claim 1. By that combination of features it is possible to transmit torque between engine and vehicle axle at different gear ratios for engine braking of different strengths. Thus a wide range of choices is available to optimize engine braking under varying situations.

The features and advantages of the present invention will be apparent from the following detailed description with reference to the accompanying drawings, in which:

Figure 1 is a schematic illustration of the speed change mechanism of the automatic transmission of the invention;

Figure 2 is an illustration of a hydraulic actuating unit with a plurality of solenoids with which the shift valves of the hydraulic unit are associated;

Figure 3, 4a and 4b are partial views of one of the shift valves of Figure 2;

Figure 5 is a schematic illustration of the hydraulic circuit of the hydraulic actuating unit of Figure 2;

Figure 6 is an illustration of the main part of the control circuit of Figure 2;

Figures 7a to 7c are illustrations of shift patterns associated with the circuit of Figure 6;

Figure 8 is a schematic illustration of a shock reduction control circuit which forms part of the circuit of Figure 2;

Figures 9a and 9b are illustrations of shift patterns associated with the circuit of Figure 8;

Figure 10 is a schematic illustration of automatic drive control circuit forming part of the Figure 2 circuit;

Figures 11a to 11d are illustrations of transmission shift patterns associated with the circuit of Figure 10;

Figure 12 is a schematic illustration of an axle lock mechanism;

Figure 13 is an illustration of a parking lock mechanism which forms part of the mechanism of Figure 12;

Figure 14 is an illustration of the lock shaft of Figure 13;

Figure 15 is an illustration of a hand brake mechanism forming part of the mechanism of Figure 12;

Figure 16 is a cross-sectional view taken along the lines 16—16 of Figure 15;

Figure 17 is a schematic illustration of the grooves formed on the inner wall of the guide shaft of Figure 15;

Figure 18 is a cross-sectional view taken along the lines 18—18 of Figure 15;

Figure 19 is an illustration of an axle lock control circuit forming part of the Figure 1 control system;

Figure 20 is an illustration of a fail safe control circuit; and

Figure 21 is an illustration of a modification of the circuit of Figure 20.

## Detailed Description

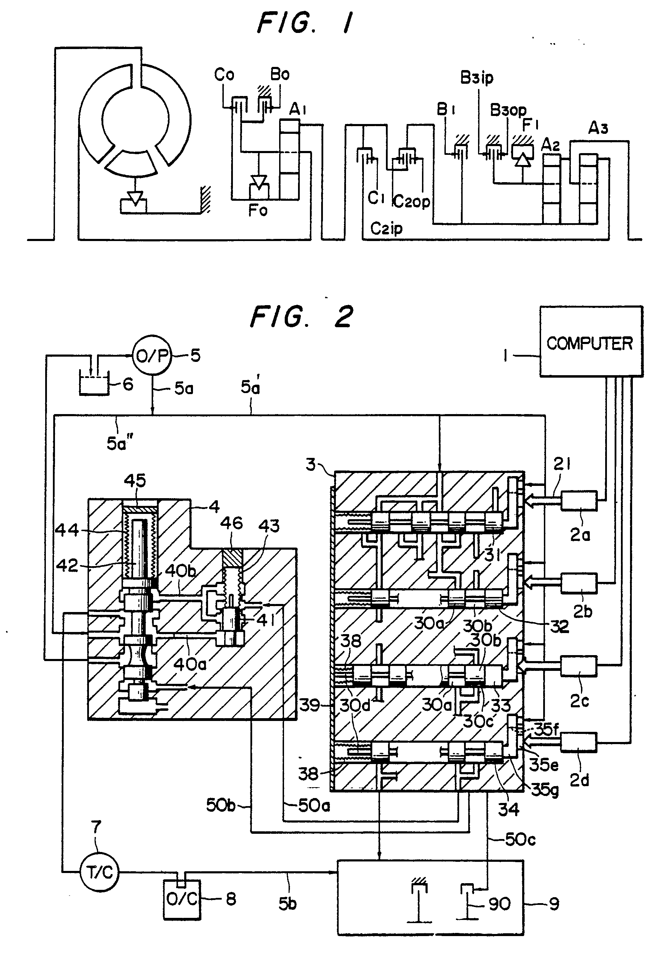

In Figure 1 of the drawings, the gear shift mechanism of a four-speed automatic transmission of the invention is illustrated as comprising three planetary gear systems A1, A2 and A3 and three engaging clutches C0, C1 and C2 (the inner and outer pistons being designated "ip" and "op" respectively) which control the operating mode of the one-way clutches F0 and F1, and three engaging brakes B0, B1 and B3 (ip and op), all of which are supplied with working fluid or oil under the control of a fluid control or mode switching mechanism. The fluid control mechanism includes control valves which regulate oil pressure for switching drive gear ratios and also control the switching between different engaging modes to decrease the amount of shock which occurs at the time of change in gear ratio by synchronizing the engine revolution with the crankshaft revolution, or function to select an appropriate engaging mode to decrease the amount of the shock by operating one of the inner and outer piston engaging clutches (or brakes).

The mode switching mechanism will be explained with reference to Figures 2, 3, 4 and 5. Figure 2 is a schematic illustration of this mode switching mechanism A control computer 1 detects vehicle's operating conditions and activates #1 to #4 solenoids (designated respectively 2a, 2b, 2c, 2d) in accordance with the detected operating condition. Numeral 3 represents a hydraulic actuating unit having a set of shift valves 31, 32, 33 and 34 which respectively control the opening of passages for oil under regulated pressure in response to the operation of associated solenoids.

A lubricating oil pressure regulator 4 of the conventional design regulates the pressure of lubricating oil according to the drive range and other gear shift range (P, R, N, D). Also shown in Figure 2 are an oil pump 5, an oil reservoir or strainer 6 which serves to filter out foreign objects contained in the oil, a torque converter 7 and an oil cooler 8 all of which are of the conventional design. The gear change mechanism of Figure 1 is shown in Figure 2 schematically at 9. The line pressure regulator 3 is connected to the oil pump 5 via pressure line 5a through 5a', and the lubricating oil pressure regulator 4 is connected to the pump 5 via line 5a through 5a''.

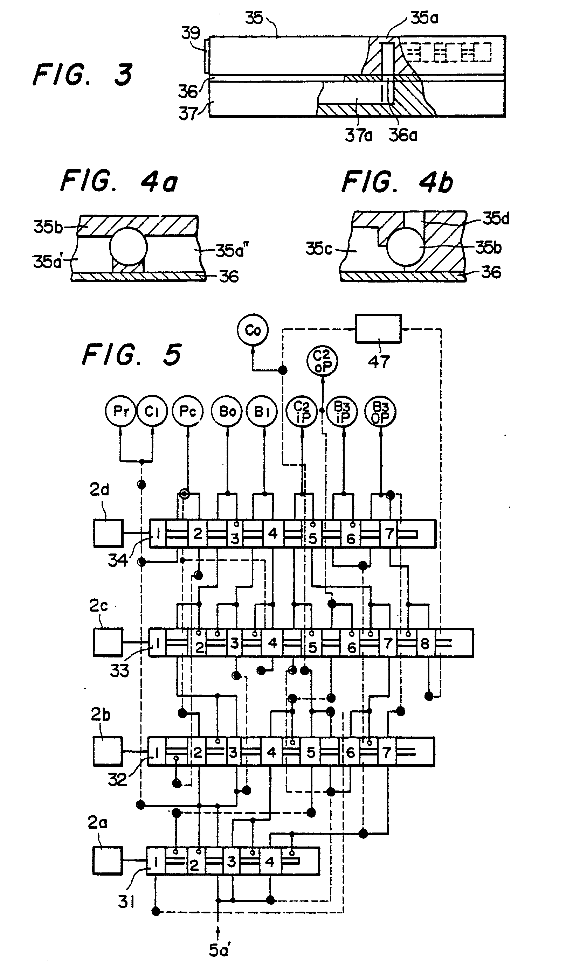

The lubricating oil pressure regulator 4 includes a pressure relay valve 41 which is in communication through a pressure relay passage 50a to the line pressure regulator 3 to receive pressure-regulated oil therefrom and receives a line pressure input through a pressure relay outlet passage 40b by the action of a spring 43 seated between a sealing plug 46 and the valve 41. Further included is a pressure regulator valve 42 which receives the pressure relay outlet through the passage 40b and oil under pressure regulated in accordance with the speed selected by the hydraulic actuating unit 3 via an inlet passage 50b to regulate the pressure of lubricating oil in passage 5b by the action of a spring 44 seated between a holding plug 45 and the valve 42. Each of the engaging clutches indicated at 90 is in communication with an outlet passage 50c, the details of which are illustrated in Figures 3 to 5 and Tables 1 and 2.

Figure 5 is a schematic illustration of the hydraulic actuating circuit of the unit 3 in relation to the associated clutches in which solid lines indicate the passages which are directly controlled by shift valves 31—34 (one of which is shown in detail in Figure 3 as being accommodated in a cylinder 35) and circles indicate an oil passage 35a and an oil communicating bore 36a in oil sheet 36 (see Figure 3) and broken lines indicate passages communicating with passage 37a in a housing 37 which leads to the bore 36a. Figs. 4a and 4b illustrate the switching mechanism of the oil passage within the cylinder 35 which is shown as including a slide bore or passage through which the shift valve is slidably accommodated and a pair of passages 35a' and 35a'' extending in directions opposite from the passage 35b. The passages 35a' and 35a'' are in communication with each other when a shaft portion 30b of the shift valve is positioned between them, and the communication is shut off by a land portion 30a of the shift valve. The cylinder 35 further includes a one way passage 35c which is brought into communication with a passage 35d to the outside when a shaft portion 35b of the shift valve is positioned between them. Under the pressure of oil supplied through line 5a' to the rightmost land 30c of each shift valve, the latter is moved to the left compressing a spring 38 as indicated in the third shift valve 33. When the oil pressure is not applied, the lands 30c of the shift valves are located in the rightmost position of the passage 35b as indicated by the first, second and fourth shift valves 31, 32, 34 by the action of spring 38. The leftward movement of the shift valves is limited by a shaft 30d whose length is determined so that it comes into contact with a stopper panel 39 when the land 30a is moved by an amount corresponding to one passage in response to the pressure at line 5a'. Each of the solenoids 2a to 2d has a plunger 21 which is normally in a retracted position in the absence of an actuating signal from the computer 1. In response to a signal from the computer 1, the plunger 21 is moved to an extended position in which it closes a drain passage 35e to allow oil under pressure at line 5a' to apply pressure to the shift valve through an orifice 35f. The size of the orifice 35f is selected to proportion the amount of drained oil at a negligibly small value compared with the amount of oil supply, so that when the drain passage 35e is open the pressure in chamber 35g may not increase, while at the same time the line pressure at 5a' may not decrease excessively.

In Figure 5, numeral 47 represents a pressure regulating valve which provides oil under constant pressure to the clutch B3op to adjust the engaging power of the one-way clutch $F_1$. The pressure relay output 50a and pressure regulator output 50b are respectively represented by characters Pr and Pc shown in circles.

By operating one or more of solenoids 2a to 2d under the control of the computer 1, the shift valves 31 to 34 are activated to provide 16 different combinations or modes among which 14 modes are used for 9 speed change operations, 4 engaging modes and an axle lock mode as illustrated in Table 1. The clutches and regulating valves shown in circles respond to a selected mode. Table 2 illustrates the ON-OFF states of the solenoids 2a to 2d and their relationship to the No. 1 to No. 14 modes.

More specifically, the No. 3 mode is effected when solenoids 2 are turned off. In this mode the shift valves 31 to 34 are positioned as illustrated in Figure 5 and oil pressure at 5a' is supplied to the engaging clutches C0, C1, C2ip and to the lubricating oil valves (pressure regulator valve Pc and pressure relay valves Pr) to effect shifting to 3rd speed.

TABLE 1

| | | OPERATING MODES | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | (13) | 14 |
| | | NORMAL | | | | ENG BRK | | RANGE | | | ENGAGEMENT | | | | |
| | | 1st | 2nd | 3rd | 4th | 1st | 2nd | P | R | N | P→R N→R | SHUP | SHDW | KCDW | AXLE LOCK |
| CLUTCHES | C0 | × | | × | | × | × | × | × | × | × | | | × | × |
| | C1 | × | × | × | × | × | × | | | | | × | × | × | |
| | C2ip | | | × | × | | | | × | | × | × | | | |
| | C2op | | | | | | | | × | | | | | | |
| | B0 | | | | × | | | | | | | | | | |
| | B1 | | × | | | | × | | | | | × | | | × |
| | B3ip | | | | | | | | × | | | | | | × |
| | B3op | | | | | × | | × | × | | × | | | | × |
| LUBRICATION | Pc | | × | × | × | | × | | | | | × | × | | |
| | Pr | × | × | × | × | × | × | | | | | × | × | × | |

0 038 083

TABLE 2

SOLENOIDS

ON                    OFF ------------- (2a)

ON        OFF            ON        OFF ------- (2b)

ON    OFF    ON    OFF    ON    OFF    ON    OFF --- (2c)

ON  OFF  OFF ON  OFF ON  OFF ON  OFF ON  OFF ON  OFF ON  OFF --- (2d)

MODE
NO.   10    14    8    7    9    11   2   12   4   5   6   1,18   3

0 038 083

In the No. 5 mode, solenoids 2a are turned off and solenoids 2c and 2d are turned on to move the shift valves 33 and 34 to the right in Figure 5, whereby the oil pressure at line 5a' is supplied to the engaging clutch C0, C1 and B3op and to the pressure relay valve Pr so that the 1st speed of engine braking is effected. In this way, each shift valve is operated in accordance with the associated solenoid to select one of the operating modes listed in Table 1.

Although the No. 1 and No. 13 modes are effected by the same combination of solenoids as seen from Table 1, these modes can be discriminated from each other by the fact that in the latter mode the 1st speed gear is momentarily effected to provide kickdown by increasing the engine revolution to a higher speed. The No. 10 to 13 modes are used for decreasing the amount of shock which might occur during gear engagement. More specifically, in the No. 10 mode one of the inner piston (i) and outer piston (op) is operated to decrease the engaging power of the clutch to cause it to slide in response to an excessively large input torque to prevent it from being transmitted to the axle. In the shiftup mode (No. 11 mode) the clutches B1 and C2ip are operated momentarily to decrease the engine speed. In the shiftdown mode (No. 12 mode) the clutch C1 is operated to shift the gear to the neutral position.

In the No. 14 mode (the axle lock mode) the engaging brake B1 (which serves to hold the outer teeth axle) and the brake B3 (which operates to hold the sun gear shaft) simultaneously to prevent the vehicle axle from rotating freely with the inner teeth axle. In this mode, the clutches C1 and C2 are disengaged to avoid interference between engaging brakes from each other.

While, in the above description, the line pressure 5a' is supplied through the hydraulic actuating unit 3, it is also possible, as in the conventional manner, to provide orifices or accumulators in the circuits leading to the clutches from the hydraulic actuating unit for purposes of gradually varying the pressure supplied to the clutches.

The description will now be concerned with the details of the computer 1.

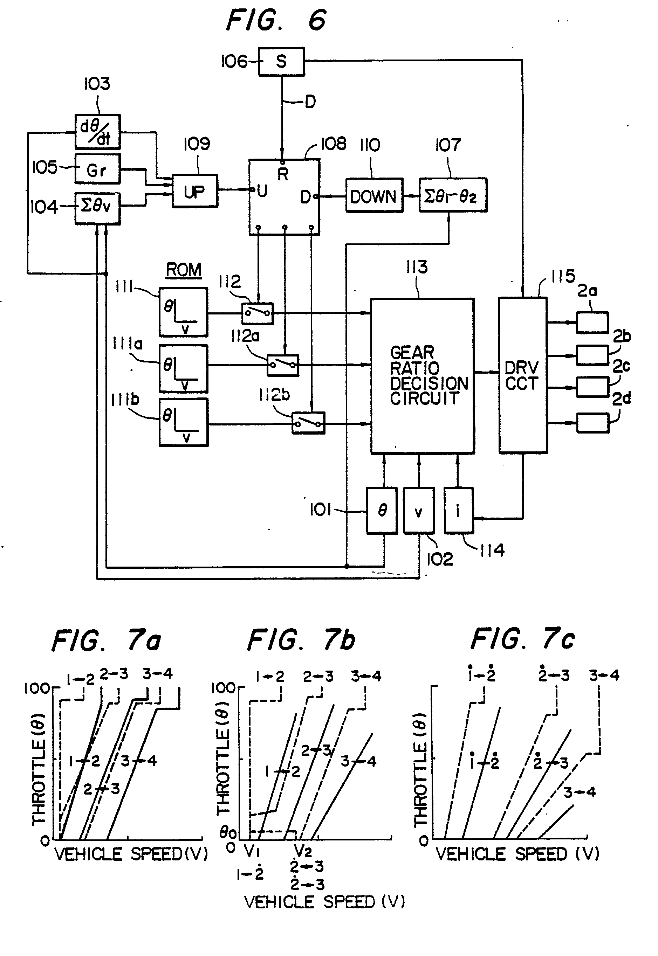

In Figure 6 the part of the computer which performs engine braking is illustrated, the gear shift patterns associated with the engine braking being illustrated in Figures 7a to 7c. Numerals 101 and 102 represent a throttle opening sensor and a vehicle speed sensor respectively, and numeral 103 represents an accelerator operating speed detector which provides a derivative of the throttle signal sensed by the sensor 101 and delivers an output signal when the derivative is greater than a predetermined value. When the accelerator pedal is rapidly depressed or rapidly released the sensor 103 applies an upshift command signal to an upshift pulse generator 109. Numeral 104 represents a load sensor which also generates an upshift command signal when throttle opening is less than a predetermined value (fully closed condition, for example) or greater than a predetermined large angle (high to full load) while at the same time the vehicle is coasting at a speed higher than a medium speed for a period longer than 5 seconds. The upshift command signal is further generated by a gradient detector 105 when the vehicle is ascending a high gradient hill or going downhill. In drive range a shift lever position switch 106 applies a reset signal to a shift pattern selector 108 and at the same time an actuating signal to a solenoid operating circuit 115 in response to each range. Numeral 107 represents a coasting condition detector which supplies a downshift command signal to a downshift pulse generator 110 when part-throttle condition prevails for a predetermined period. The shift pattern selector 108 activates one of switches or gates 112, 112a, 112b in response to upshift and downshift pulses to determine which one of three patterns of operating mode is to be selected. The pattern selector is reset in response to a drive range signal provided by the shift position switch 106 to permit the transmission to operate on the normal operating mode.

The gear shift patterns Figures 7a, 7b and 7c are stored respectively in read only memories (ROMs) 111a, 111 and 111b which represent upshift mode, normal operating mode and downshift mode, respectively, each of which determines which one of the gears to be engaged in response to the detected value of throttle opening $\theta$ as a function of vehicle speed V.

A gear ratio decision circuit 113 receives data read out of the ROM selected according to the signal applied to one of the switches 112, 112a and 112b to determine whether the gear ratio should be retained or changed as a function of additional data including the throttle opening data from sensor 101 and the vehicle speed data from sensor 102.

The result of the decision made by the circuit 113 and a shift lever position signal from the shift lever detector switch 106 are presented to the solenoid actuating circuit 115 to activate one or more of the solenoids 2a to 2d to select one of the operating modes listed in Table 2. Therefore, the operating modes are selected according to the gear in drive range or according to the position of shift lever.

In Figures 7a through 7c, the rightwardly pointing arrows indicate the direction of upshift represented by solid lines and the leftwardly pointing arrows indicate the direction of downshift represented by broken lines and numerals 1 to 4 represent 1st to 4th speeds respectively and $\dot{1}$ and $\dot{2}$ represent 1st and 2nd engine braking, respectively.

Figure 7a illustrates a downshift mode pattern which gives its priority to fuel economy. In this fuel economy pattern 1st, 2nd, 3rd and 4th speeds are involved and shifting to a high speed gear occurs in a lower speed range.

Figure 7c is an illustration of an upshift mode pattern which gives its priority to power drive and involves the use of 1st and 2nd engine braking, and 3rd and 4th speeds. It is so arranged that at high vehicle speeds low speed gears are used to make engine braking operate effectively.

The pattern shown in Figure 7b is the normal shift pattern involving the use of 1st, 2nd and 4th speeds which are intermediate between those of the patterns of Figures 7a and 7c. This normal shift pattern involves additional engine braking modes represented by downshift lines at one of which a 3-to-2 downshift occurs when vehicle speed reduces with a small throttle opening and at the other of which a 2-to-1 downshift occurs at a vehicle speed V1 (Engine braking mode will be hereinafter indicated by a numeral with a dot thereon). Engine braking mode $\dot{2}$ will be released for upshift to 2nd or 3rd speed when the engine is throttled to an opening greater than $\theta_0$.

According to the shift patterns just described, the pattern of Figure 7b permits selection of an appropriate vehicle speed value for shifting to an engine brake mode to best utilize the effect of engine braking during the normal mode when the vehicle is under deceleration to a halt. During rapid deceleration or downhill drive the upshift mode pattern of Figure 7c is selected to determine an appropriate vehicle speed value for shifting to an engine brake mode in response to the outputs of accelerator detector 103 and load sensor 104, or the gradient detector 105 so that the effect of engine braking is utilized to the fullest extent. If coasting drive continues during the upshift mode of Figure 7c, the mode pattern is shifted to the normal or downshift mode in response to a downshift command signal. During the fuel economy mode pattern of Figure 7a in which the engine is run at a constant throttle opening, the use of engine braking is avoided where inappropriate so that the fuel economy mode is retained as long as possible until the driving conditions justify shifting to an upshift mode pattern.

The shift patterns of Figures 7a to 7c may be modified. In this modification the grade of terrain is detected in two different steps to generate an upshift command signal in response to the detection of a medium grade terrain to upshift in one step and generate two upshift command signals in succession in response to the detection of a steep grade terrain to upshift successively in two steps. Furthermore, the upshift command signal may also be generated by the use of a brake detector or by the use of a temperature sensor which detects the engine coolant water temperature or engine oil temperature during cold starting period.

Furthermore, during engine braking at medium-to-high vehicle speeds, the braking effect can be further enhanced by modifying the above-described patterns so that the mode of engine braking initially shifts from 2nd to 1st engine brake mode and then the latter mode is terminated when the vehicle speed has reduced to a lower value. This modification serves to reduce the amount of braking effort.

The shift pattern of Figure 7b may be modified so that 2nd engine brake mode is initiated at a vehicle speed with the falls in a range between V1 and V2 which throttle being closed under the condition that the vehicle speed has reduced from a value higher than V2.

The pattern of Figure 7c may be modified so that it involves the use of 1st and 2nd speeds of Figure 7a as engine brake modes and the use of comparators for comparing the detected vehicle speed and throttle opening with predetermined corresponding values to generate information for making a decision on selecting these engine brake modes.

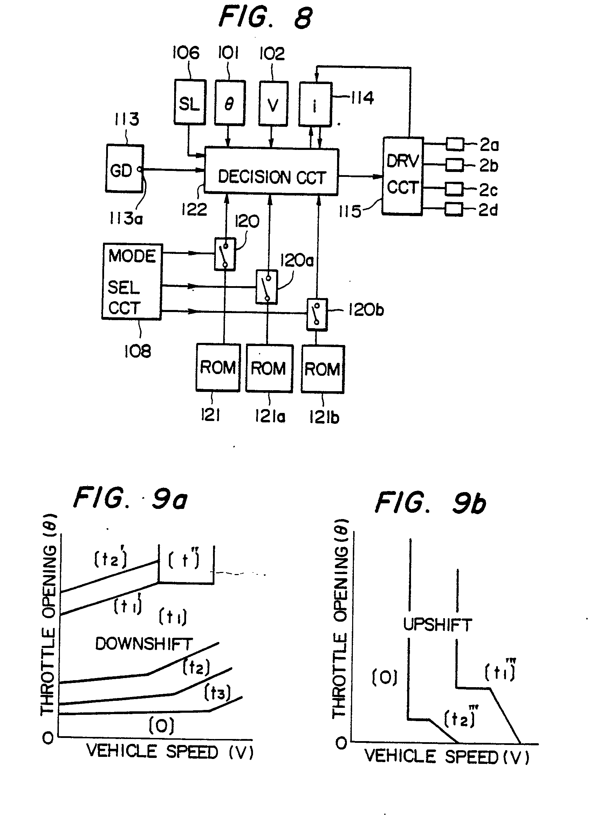

The description will now be concerned with an embodiment which is effective in reducing shock during gear change with reference to Figures 8 and 9 in which an electronic control circuit and its operating characteristics are shown, respectively.

In Figure 8, parts corresponding to those in Figure 6 are marked with the same reference numerals as those in Figure 6 so that the parts having corresponding reference numerals in Figure 8 have corresponding significance to those in Figure 6. Read only memories 121a and 121b are provided which store gear engaging mode patterns illustrated in Figures 9a and 9b.

The stored gear engaging mode data are read out of the ROMs 121a and 121b to a selection signal supplied from the pattern selector 108 to a selected one of switches 120a and 120b. An engaging mode decision making circuit 122 compares the mode pattern data supplied from the selected one of the ROMs 121a and 121b with the data supplied thereto from the various sensors including shift lever position sensor 106, throttle opening sensor 101, vehicle speed sensor 102 and generates an output signal to the solenoid actuating circuit 115 when triggered in response to a trigger signal supplied from the output terminal 113a of the gear ratio decision making circuit 113. Figures 9a and 9b are illustrations of downshift and upshift patterns, respectively. (t''') represents the operating time period and [0] indicates that engaging mode is ineffective. The length of each time period is set so that a relation $0 < t_1''' < t_2'''$ is established. This enhances the effect of engine braking during upshift under high vehicle load, high engine speed conditions. In Figure 9a relation $0 < t_1 < t_2 < t_3$ is established to provide a gear ratio corresponding to the neutral mode (No. 2), Table 1. Relation $0 < t_1' < t_2'$ is established for [$t_1'$] which is used during 3rd-to-2nd kickdown by shifting to 1st speed of mode No. 2 and by increasing the engine revolution to approach the revolution of the axle. [$t''$] is used for 4th-to-3rd kickdown by temporarily shifting to 2nd speed of mode No. 11, there being no engaging operation outside the established range during downshift.

The gear engaging modes and the associated engaging times are varied as a function of the detected throttle opening and engine revolution to decrease the amount of shock during gear shift.

Although not shown in the drawings, the engaging time may have a smaller value during acceleration or deceleration than during other modes so that power transmission from the engine to axle may not discontinue, whereby appropriate gear engaging modes are established for varying drive conditions.

In Figures 8, 9a and 9b the engaging modes are shown as corresponding to different gear shift patterns. It is also possible to provide an additional engaging mode which compensates for a large fluctuation in engine revolution at neutral due to increased viscosity of lubrication oil during low temperature conditions by sensing engine oil temperature and selecting such mode in response to the sensed engine oil temperature, whereby the amount of gear engaging shock during shifting to or from neutral is reduced.

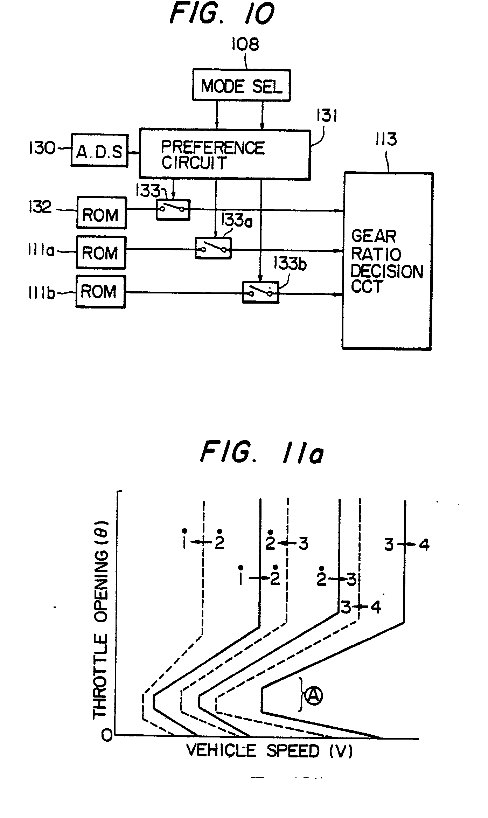

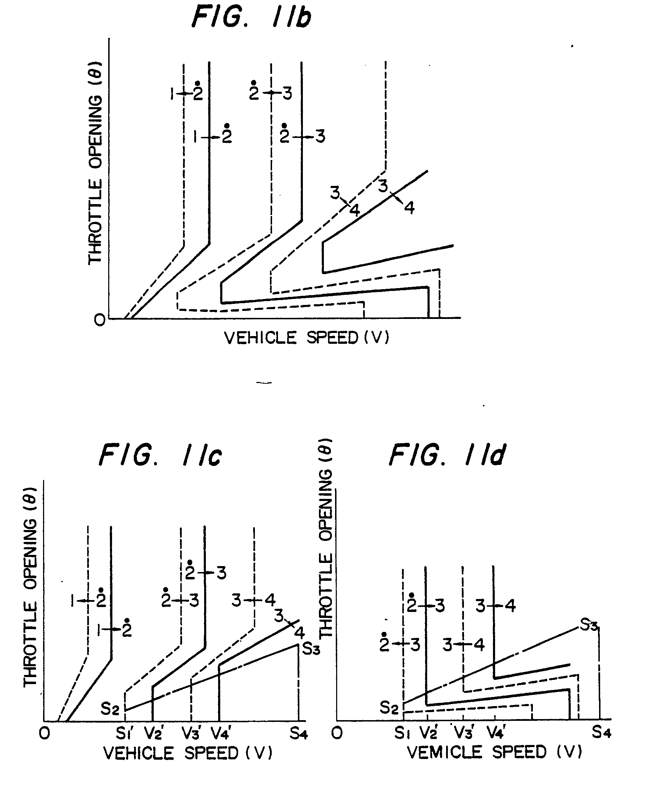

Description will now be concerned with an automatic-drive system with which the coasting speed is controlled. The control circuit of the automatic-drive system is shown in Figure 10; In Figure 10 parts which corresponds to those in Figure 6 are marked with the same reference numerals as those in Figure 6. The parts having corresponding numerals have corresponding significance in Figures 6 and 10. Gear shift patterns for automatic drive mode, shown respectively in Figures 11a to 11d, are stored in a ROM 132. The mode selecting circuit 108 applies its output signal to a preferential circuit 131 which activates a switch 133 in response to an output from an automatic drive mode sensor 130 and transfers the outputs of circuit 108 to switches 133a and 133b in the absence of the output signal of the automatic-drive mode sensor 130 in order to read the data out of the ROMs 132, 111a and 111b, respectively, into the gear ratio decision circuit 113. As illustrated in Figure 11a, downshift lines at throttle openings θ in a low-to-medium range are positioned close to normal coasting drive range designated A to facilitate downshift during uphill drive and at throttle openings in a medium-to-fully closed range they are positioned on the small opening throttle side of the normal coasting drive A to make engine braking (shift down) operate smoothly with the vehicle running at high speeds. Engine brake mode is used in 1st and 2nd speeds.

Although shifting occurs too frequently for the purpose of normal drive, this shift pattern assures, during automatic drive, a smooth throttling operation which results in small vehicle speed variation and appropriately timed gear. Since the shift lines are closely spaced apart, downshift operation is effected frequently in response to vehicle speed variations during transients (acceleration or deceleration) and engine braking is further effectively achieved, so that shifting operation appropriately occurs during uphill or downhill drive.

When the transmission is not in the automatic drive mode, the normal shift mode pattern is selected. The shift mode pattern is selected. The shift mode pattern of Figure 11a is also applicable to a three-speed automatic transmission.

In a modified embodiment, downshift lines in a kickdown mode on the fully open throttle side of the conventional pattern are preferably replaced with those determined by uphill grade. In such instances the uphill grade may be determined so that downshift occurs at vehicle speeds higher than 35 km/h (above which automatic drive system is operated) when the uphill grade is less than 10 degrees.

Further, as illustrated in Figure 11b, the use of high speed gear is limited in a medium range of throttle opening in order to prevent it from being used when throttle opening is small (during deceleration) at which engine braking becomes ineffective. Shiftdown lines may also be set so that throttle opening increases as a function of vehicle speed during downhill drive to facilitate downshift to medium or low speed gear in order to counteract the tendency of the automatic drive system toward decreasing the throttle opening with the increase in vehicle speed. If the mode pattern includes only one shiftdown or shiftup point of a given throttle opening, reference vehicle speed values are established for downshift and upshift points which correspond to the given throttle opening and by making a comparison between the actual vehicle speed V and the established speed values, it is possible to effect upshift and downshift operations with the shift pattern of Figure 11a.

If the shift pattern includes two upshift or downshift points for a given throttle opening as illustrated in Figure 11b, it is difficult to discriminate between upshift and downshift. This difficulty is eliminated by dividing the pattern of Figure 11b into two patterns as illustrated in Figures 11c and 11d and by selecting one of these patterns depending on whether the throttle opening and the vehicle speed fall within the area defined by points S1, S2, S3 and S4 or not. If the pattern of 11a is selected the mode shifting is accomplished in the same manner as described in connection with Figure 11a, and if the pattern of Figure 11d is selected reference values of throttle opening θ are established for upshift and downshift corresponding to a given vehicle speed and by making a comparison between the actual throttle opening and the reference values it is possible to make a decision on upshift and downshift.

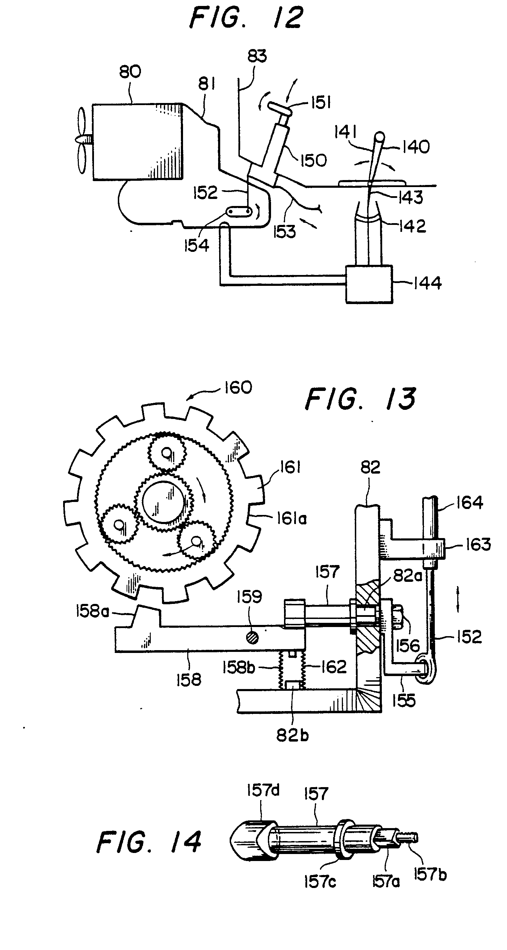

Figures 12 to 19 are illustrations of an axle lockup system used for parking the vehicle. In Figure 12 which schematically illustrates the general construction of the lockup system, numerals 80, 81, 83 respectively represent the engine, the automatic transmission and the shift lever whose pivot movement is detected by a shift lever position detector 142 having Reverse, Neutral and Drive switches which are closed when in contact with a contact arm 143 connected to the shift lever 140 to provide a position signal to a control circuit 144. A hand brake assembly 150 includes a knob 151 whose rotary movement causes the assembly to provide parking lock on the axle and whose upward movement causes the assembly to provide hand braking.

The hand brake mechanism is of a conventional mechanism, so the description thereof is not necessary for simplicity. The locking mechanism 154 of parking lock system is illustrated in Figures 13 and 14. A lock shaft 157 is rotatably mounted through an opening 82a of the transmission's housing 82 and formed with a rectangular cross-sectional portion 157a, an externally threaded part 157b, a flange portion 157c and a cam portion 157d. A crank arm 155 having its outer end connected to the wire 152 and its center fastened to the rectangular section 157a of the lock shaft 157 and clamped in place by a nut 156 engaging the externally threaded part 157b. When the wire 152 is pulled upward the crank arm 155 is rotated to turn the lock shaft 157. The flange 157c is spaced from the rectangular section 157a so that it assures a certain degree of play in the axial direction to permit the lock shaft 157 to rotate smoothly. A lock pawl 158, pivoted at 159, is arranged to engage the cam 157d of the lock shaft 157 when the latter is rotated, so that the other end position 158a of the pawl 158 may come into meshing engagement with the teeth 161a formed on the outer circumference of the ring gear 161 of the planetary gear system (A2) 160 of Figure 1. The pawl 158 is normally urged in the counterclockwise direction by means of spring 162 held in place by holding means 158a and 82b to prevent the pawl 158 from engaging with the ring gear 161 when parking lock is not provided. Numeral 163 represents a wire guide secured to the housing 82 serve as a guide for wire 152 which is covered by a wire cover 164.

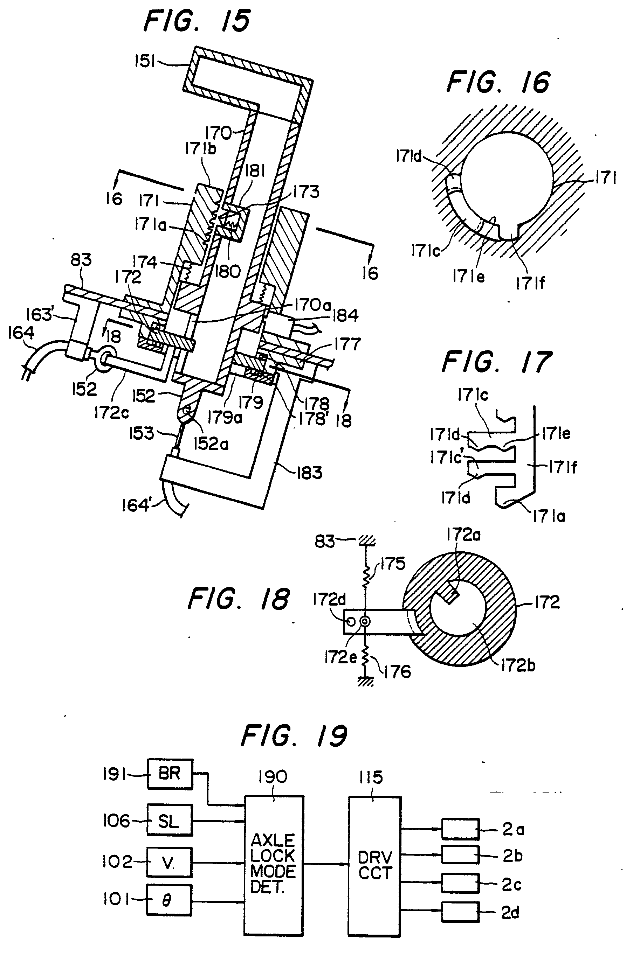

Details of the hand brake assembly will now be described with reference to Figures 15 to 18. The knob 151 is fastened to the upper end of a hand brake shaft 170 by fastening means, not shown. A casing or guide 171 is fixed to the vehicle body 83 by bolts, not shown, and the shaft 170 is received in the guide 171 for longitudinal and rotary movements with respect to the guide 171. The shaft 170 is normally urged by a spring 174 to a downward position and further urged by spring members 175 and 176 to predetermined angular position so that a lock pin 173 may engage a lowermost groove 171a formed on the inner wall of the guide 171. A rotary link 172 has a tooth 172a engaged with a groove 170a of the hand brake shaft 170, which in turn is received in a center opening 172b of the link 172, and is supported between bearings 178 and 178' (which are fixed to lower case 177 and a cover member 179), so that it may not rotate when shaft 170 is moved in vertical directions, while it becomes rotatable when shaft 170 is rotated. The cover member 179 is fastened to the lower case 177 by means of bolts, not shown, and is formed with a center opening 179a through which the rotary arm section 172c of the rotary link 172 extends. Numeral 172d represents a connecting hole to which the parking lock wire 152 terminates. Spring members 175 and 176 are connected to the arm portion 172c of the link at 172e. The lock wire 152 is covered with a sleeve 164 which is slidably supported by a bracket 163'. The lock pin 173, housed in a common case 181 with a spring 180, is held against the inner wall of the guide 171 by spring 180 so that it engages a groove 171b when the shaft 170 is pulled to an upward position, the case 181 being fixed to the inner wall of the shaft 170 by welding or suitable means. The lock pin 173 is shaped so that it has an upper inclined surface which permits the shaft 170 to move upward against the grooves on the inner wall of the guide 171 while it prevents the shaft from moving downward when the pin 173 is in engagement with the groove 171b, whereby the lock pin 173 provides a one-way clutch action between the shaft 170 and guide 171. On the inner wall of the guide 171 a plurality of grooves are formed as illustrated in Figures 16 and 17. These grooves comprise a parking guide groove 171c, parking lock groove 171d, a hand brake lock groove 171e and a release groove 171f. The grooves 171d and 171e are in the form of a downwardly shaped recess for the purposes of allowing the vehicle driver to discriminate therebetween by having different feelings when he manipulates the knob 151 in an attempt to provide parking or side brake and of preventing the pin 173 from disengaging from these grooves by the action of spring members 175 and 176. The release groove 171f is in communication with the parking guide groove 171c to release the one-way clutch engagement of pin 173 when the knob 151 is rotated counterclockwise to allow the shaft 170 to move downward to the position of the lowermost groove 171a. A wire support 183 extends from the panel 133 to slidably hold the side brake wire 153 with a sleeve 164' connected to the lower end portion 152 of the hand brake shaft 170, the wire 153 terminating at one end at an opening 152a of the end portion 152 and terminating at the other end to the side brake mechanism mounted adjacent to the vehicle wheels. A hand brake switch 184 is provided to generate an indicator signal when the hand brake shaft 170 is brought to an upward position in order to provide a visual indication.

Figure 19 is an illustration of a control of the axle lock system. Numeral 190 represent a discriminator circuit which receives various inputs from throttle opening sensor 101, vehicle speed sensor 102, shift position sensor 106 and a brake sensor 191. The discriminator 190 provides an axle lock singal to the solenoid activating circuit 115 when the following input conditions are satisfied: the shift position sensor 106 indicates that the transmission is in drive range; the vehicle speed sensor 102 generates a signal indicating that the speed is 1 km/h or less, for example; the throttle opening sensor 101 generates a signal indicating that throttle is fully closed; and the brake sensor 191 provides an ON signal representing that brake is being applied. When the throttle opening sensor 101 changes its output state in response to the throttle being slightly opened, the discriminator 190 cancels the axle lock signal and applies a drive range signal to the solenoid operating circuit 115.

With the arrangement just described, the automatic transmission of the invention automatically locks up the axle in accordance with the axle lock mode listed in Table 1. Therefore, it is possible for the driver to park the vehicle without changing the shift range and without depressing the foot brake pedal and start up the vehicle by automatically releasing the axle lock mode when he operates the accelerator pedal.

It is also possible for the driver to stop the vehicle after the engine has stopped operating by merely pulling up the single control knob 151 or rotating the knob 151 or performing the both operations. For example, when parking lock is desired, the knob 151 is pulled one step upward so that the pin 173 may disengage from contact with the lowermost groove 171a and the knob 151 is then rotated so that pin 173 comes into contact with the parking guide groove 171d, whereby only parking lock is provided.

Therefore, the present invention eliminates the need to operate the foot brake pedal when parking the vehicle or eliminates the need to provide parking lock operation as desired, whereby driver's effort during parking operation is simplified. Since the control knob 151 serves the dual functions of parking lock and side braking, the assembly may be located separately from gear shift lever to reduce the likelihood of confusion on the part of the driver. It is to be noted that the hand brake assembly of the above described embodiment could equally be as well used in a three-speed automatic transmission.

The control circuit of Figure 19 may be modified so that the discriminator circuit 190 is arranged to store a brake signal from the brake detector 191 for a specified period of time, 1 second for example, in a memory and the stored information is subsequently read out of the memory to generate the axle lock mode signal.

Furthermore, it is possible to reduce the amount of shock which tends to occur during gear shift from axle lock mode to 1st speed gear by forcibly shifting to 2nd gear on the low throttle opening side to reduce the amount of torque transmitted from the engine output shaft. It is further possible to shift from axle lock mode to 1st gear at a medium-to-high throttle opening when rapid acceleration is required by providing an additional control unit.

In the above description the axle lock mode is operated in drive range. However, it is also possible to provide axle lock mode in neutral or reverse range by detecting the vehicle speed. Further, a warning system could be provided to generate a warning signal to alert the vehicle occupant when he fails to operate the hand brake after the engine has ceased running in response to a signal from a hand brake switch.

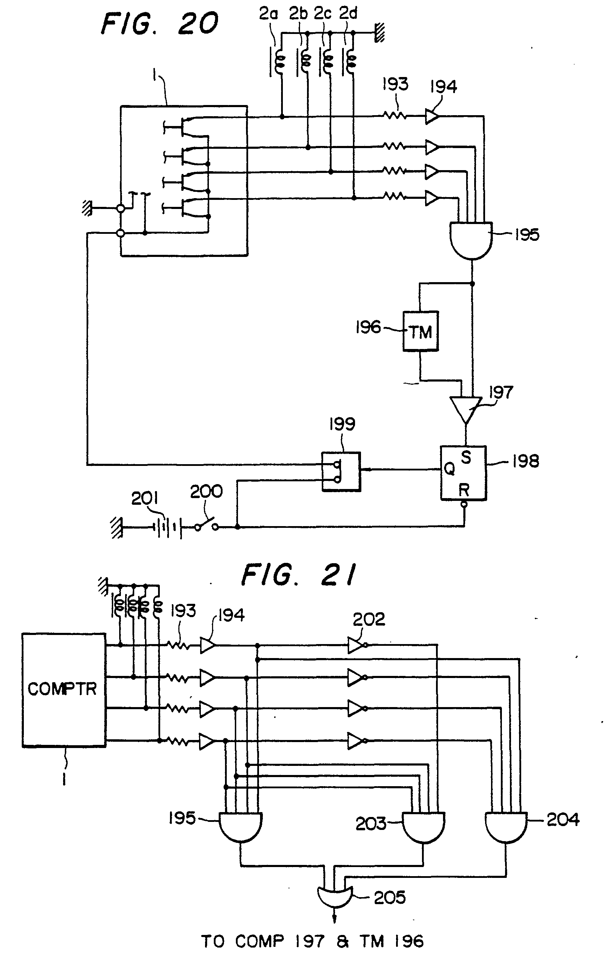

Figure 20 is an illustration of a fail-safe arrangement according to the invention. This fail-safe arrangement generates a signal for operating on 3rd gear to ensure the vehicle to run in the event that all of the solenoids are turned on. In the event of a failure in which all of the solenoids remain in the ON state, it generates a signal for synthesizing a shock-reducing engaging mode of half reverse which is briefly used during P-to-R and N-to-R range shift. Since this engaging mode is usually not used for a long period, a failure detection circuit can determine the state of the malfunction by sensing the length of time of such engaging mode. The fail-safe arrangement changes the state of all-solenoid-on to the all-solenoid-off state when it should detect that the engaging mode exists for a predetermined period. The input circuits to the solenoids 2a to 2d from the computer 1 are further connected through current limiting resistors 193 and through threshold detectors 194, each of which detects the conduction of current to respective solenoid, to the inputs of an AND gate 195. The output of the AND gate 195 is connected directly to an input of a comparator 197 and via a timing circuit 196 to the other input of the comparator for making a comparison between them. This timing circuit 196 stretches the output of the AND gate 195 to a predetermined length. If the output of the AND gate 195 exists for a period longer than the period set by the timing circuit 196, the comparator 197 generates an output for delivery to the set input of a flip-flop 198 to trigger it into a set condition. The Q output of the flip-flop 198 goes high and turns off a normally closed switch 199 to cut off the voltage supplied from a DC source 201 via ignition key switch 200 to the solenoid activating circuit of the computer 1. The flip-flop 198 has its reset terminal connected to the switch 200 to be reset to the original binary state when the latter is turned off. Therefore, if the computer should fail so that all the solenoids are operated for a period longer than the time set by the timing circuit 196, the comparator 197 generates a failure signal to cut off power supply to the computer, so that the currents supplied to the solenoids are cut off. Since the solenoid-all-on state corresponds to the mode No. 10 (P-to-R, N-to-R range, see Tables 1 and 2) and since the solenoid-all-off state corresponds to the mode No. 3 (3rd gear), the fail-safe circuit of Figure 20 automatically provides shifting to 3rd speed in the No. 10 mode of gear engagement to assure the minimum safety precaution against malfunctions which may occur in the computer 1. Therefore, in the event of a failure in which all the solenoids remain on, transmission is automatically shifted to 3rd speed. Provision may also be made to generate a warning indication by sensing the operating state of the switch 199.

While the embodiment of Figure 20 employs the No. 10 mode for gear engagement during shift to 3rd speed, it is possible to employ another engagement listed in Table 1 or modify the mode patterns of Table 1 so that an additional gear engagement mode is provided for exclusive use during such emergency gear shift. In this case, the output of the AND gate 195 can be exclusively used for direct application to the set input of the flip-flop 198, whereby the timing circuit 196 and comparator 197 are eliminated to simplify the fail-safe circuit.

Another embodiment of the fail-safe circuit is illustrated in Figure 21 in which the malfunction of the computer 1 is detected by checking the gear engagement time of each mode against the reference. In Figure 21, parts corresponding to those in Figure 20 are marked with the same numerals as those in Figure 20. The circuit of Figure 21 is similar to that of Figure 20 with the exception that it further includes a set of four inverters 202 connected respectively to the outputs of the threshold gates 194 to invert the logical states of the conduction of the solenoids, and AND gates 203 and 204. The AND gate 203 has its four inputs coupled respectively to solenoids 2a to 2d such that it detects the OFF, ON, ON and ON states, respectively, of solenoids 2a, 2b, 2c and 2d, which conditions correspond to a mode listed between the No. 9 and No. 11 modes of Table 2. This mode is not usually employed for gear change operations, but used exclusively for finding fault in the computer 1. Likewise, the AND gate 204 is also coupled to the solenoids to detect their ON-OFF conditions corresponding to the No. 11 gear engaging mode of Table 2. The output circuits of the AND gates 195, 203 and 204 are connected through an OR gate 205 to the timing circuit 196 and to the comparator 197 of Figure 20.

As described above, the circuit of Figure 21 is used to detect one of the engaging modes and one of the possible combinations of the ON-OFF states of the solenoids which is not used for usual gear shift operations for the purpose of detecting malfunctions of the computer 1 and shutting off the power supply in the event of a failure.

It can be seen that the automatic transmission as taught by the present invention allows selecting an appropriate speed change pattern according to vehicle driving conditions, so that engine braking is applied in a timely manner in response to manual command input to the engine.

## Claims

1. An automatic transmission system for a vehicle having an engine with a throttle valve and an automatic transmission unit with an input shaft coupled to said engine, an output shaft coupled to an axle of said vehicle and a speed changing gear unit interconnected therebetween having brake and clutch means for establishing a plurality of speed gear ratios, wherein the system comprises a one-way clutch (F0, F1) responsive to said brake and clutch means (B0, B1, B3ip, B3op, C0, C1, C2op, C2ip) to establish one-way coupling between said input and output shafts, an engine load sensor for generating an engine load signal, a vehicle speed sensor for generating a vehicle speed signal, and a hydraulic actuating unit including a plurality of shift valves for operating said brake and clutch means and corresponding solenoids for activating said shift valves in response to solenoid operating signals to enable or disable said one-way clutch as a function of said vehicle speed and engine load signals, characterized by:
a memory (111, 111a, 111b) storing in locations addressable as a function of said vehicle speed signal and said engine load signal, a plurality of gear shift patterns representing different operating conditions of said brake and clutch means for enabling said one-way clutch to transmit torque only from said input shaft to said output shaft so that engine braking is disabled and disabling the one-way clutch to transmit torque between said input and output shafts at different gear ratios determined by said gear shift patterns for effecting engine braking of different operating characteristics; and
means (103—110, 112, 112a, 112b) for selecting a desired shift pattern from said shift patterns in response to signals indicative of at least two of engine acceleration rate, gradient of terrain, engine load and coasting and generating therefrom said solenoid operating signals.

2. An automatic transmission system as claimed in claim 1, characterized in that the shift patterns stored in said memory include speed change data (Figure 7a) appropriate for effecting engine braking with fuel economy, said data being stored in locations addressable as a function of engine speed and engine load.

3. An automatic transmission system as claimed in claim 1 or 2, characterized in that the shift patterns stored in said memory include speed change data appropriate for effecting engine braking (Figure 7b) when the vehicle is under deceleration to a halt, said engine load data being stored in locations addressable as a function of engine load and engine speed.

4. An automatic transmission system as claimed in claim 1, 2 or 3, characterized in that the shift patterns stored in said memory include speed change data (Figure 7c) appropriate for effecting engine braking when the vehicle is under rapid deceleration or downhill drive, the last-mentioned engine load data being stored in locations addressable as a function of engine load and engine speed.

5. An automatic transmission system as claimed in any one of the preceding claims, characterized in that the shift patterns stored in said memory include gear engaging time period data (Figure 9b) appropriate for effecting engine braking under high vehicle load and high engine speed condition, the last-mentioned data being stored in locations addressable as a funtion of engine speed and engine load.

## Revendications

1. Système de transmission automatique pour véhicule comportant un moteur avec un papillon et un ensemble de transmission automatique avec un arbre d'entrée accouplé au moteur, un arbre de sortie accouplé à un essieu du véhicule et un ensemble de changement de vitesses interconnecté entre eux ayant un moyen de frein et d'embrayage pour établir une pluralité de rapports de vitesses, où le système comprend un embrayage unidirectionnel (F0, F1) sensible au moyen de frein et d'embrayage (B0, B1, B3pi, B3pe, C0, C1, C2pe, C2pi) afin d'établir un couplage unidirectionnel entre les arbres d'entrée et de sortie, un détecteur de la charge du moteur pour produire un signal de charge du moteur, un détecteur de la vitesse du véhicule pour produire un signal de vitesse du véhicule, et un ensemble d'actionnement hydraulique comportant une multitude de valves de changement pour actionner le moyen de frein et d'embrayage et des solénoïdes correspondants pour actionner les valves de changement en réponse à des signaux de commande de solénoïde et valider ou invalider l'embrayage unidirectionnel en fonction des signaux de vitesse du véhicule et de charge du moteur, caractérisé par:

une mémoire (111, 111a, 111b) stockant dans des adresses pouvant être adressées en fonction du signal de vitesse du véhicule et du signal de charge du moteur, une pluralité de configurations de changement de vitesses représentant des conditions de marche différentes du moyen de frein et d'embrayage afin de valider l'embrayage unidirectionnel pour qu'il ait transmission d'un couple seulement entre l'arbre d'entrée et l'arbre de sortie et que le frein moteur soit invalidé et d'invalider l'embrayage unidirectionnel pour qu'il y ait transmission d'un couple entre les arbres d'entrée et de sortie à des rapports de vitesse différents qui sont déterminés par les configurations de changement de vitesses pour effectuer un frein moteur ayant des caractéristiques de fonctionnement différents; et

des moyens (103—110, 112, 112a, 112b) pour sélectionner une configuration désirée du changement de vitesses à partir des configurations de changement de vitesses en réponse à des signaux représentatifs d'au moins deux des éléments suivants: taux d'accélération du moteur, pente du terrain, charge du moteur et charge par inertie, et produire à partir de celle-ci les signaux de commande de solénoïde.

2. Système de transmission automatique selon la revendication 1, caractérisé en ce que les configurations de changement de vitesses stockées dans la mémoire comprennent des données de changement de vitesse (figure 7a) appropriées pour effectuer le frein moteur avec une économie de carburant, ces données étant stockées dans des adresses pouvant être adressées en fonction de la vitesse du moteur et de la charge du moteur.

3. Système de transmission automatique selon la revendication 1 ou la revendication 2, caractérisé en ce que les configurations de changement de vitesses stockées dans la mémoire comprennent des données de changement de vitesse appropriées pour effectuer le frein moteur (figure 7b) lorsque le véhicule est en train de décélérer jusqu'à l'arrêt, les données sur la charge du moteur étant stockées dans des adresses pouvant être adressées en fonction de la charge du moteur et de la vitesse du moteur.

4. Système de transmission automatique selon la revendication 1, la revendication 2 ou la revendication 3, caractérisé en ce que les configurations de changement de vitesses stockées dans la mémoire comprennent des données sur le changement de vitesse (figure 7c) appropriées pour effectuer le frein moteur lorsque le véhicule se trouve en décélération rapide ou descend une côte, les données sur la charge du moteur citées en dernier étant stockées dans des adresses pouvant être adressées en fonction de la charge du moteur et de la vitesse du moteur.

5. Système de transmission automatique selon l'une quelconque des revendications précédentes, caractérisé en ce que les configurations de changement de vitesses stockées dans la mémoire comprennent des données sur la durée d'engagement des rapports (figure 9b) appropriées pour effectuer le frein moteur dans le cas d'une charge élevée du véhicule et d'une vitesse élevée du moteur, les données citées en dernier étant stockées dans des adresses pouvant être adressés en fonction de la vitesse du moteur et de la charge du moteur.

**Patentansprüche**

1. Automatisches Kraftübertragungssystem für ein Fahrzeug, das eine Maschine mit einem Drosselventil und eine automatische Kraftübertragungseinheit mit einer Eingangswelle, die mit der Maschine gekoppelt ist, einer Ausgangswelle, die mit einer Achse des Fahrzeuges gekoppelt ist, und einer Geschwindigkeitswechselgetriebeeinheit, die dazwischen geschaltet ist, und eine Brems- und Kupplungseinrichtung zum Bilden einer Vielzahl von Geschwindigkeitsgangverhältnissen aufweist, wobei das System eine Einwegekupplung (F0, F1), die auf die Brems- und Kupplungseinrichtung (B0, B1, B3ip, B3op, C0, C1, C2op, C2ip) anspricht, um eine Einwegekupplung zwischen der Eingangs- und der Ausgangswelle einzurichten, einen Maschinenlastsensor zum Erzeugen eines Maschinenlastsignals, einen Fahrzeuggeschwindigkeitssensor zum Erzeugen eines Fahrzeuggeschwindigkeitssignals und eine hydraulische Betätigungseinheit umfaßt, die eine Vielzahl von Schaltventilen zum Betreiben der Brems- und Kupplungseinrichung und entsprechende Solenoide zum Beätigen der Schiebeventile auf Solenoidbetriebssignale ansprechend aufweist, um die Einwegekupplung als Funktion des Fahrzeuggeschwindigkeitssignals und des Maschinenlastsignals ein- oder auszuschalten, gekennzeichnet durch einen Speicher (111, 111a, 111b), der an Speicherplätzen, die als Funktion des Fahrzeuggeschwindigkeitssignals und des Maschinenlastsignals adressierbar sind, eine Vielzahl von Gangschaltmustern speichert, die verschiedene Betriebsverhältnisse der Brems-Kupplungseinrichtung wiedergeben, um die Einwegekupplung einzuschalten, damit ein Drehmomment nur von der Eingangswelle auf die Ausgangswelle übertragen wird, so daß die Maschinenbremsung ausgeschaltet ist, und die Einwegekupplung auszuschalten, um ein Drehmoment zwischen der Eingangs- und der Ausgangswelle mit verschiedenen Gangverhältnissen zu übertragen, die durch die Gangschaltmuster bestimmt sind, um dadurch einen Maschinenbremsung mit verschiedenen Arbeitscharakteristiken zu bewirken, und eine Einrichtung (103—110, 112, 112a, 112b) sum Wählen eines gewünschten Schaltmusters aus den Schaltmustern auf Signale ansprechend, die wenigstens zwei der folgenden Kennwerte, nämlich das Maß an Maschinenbeschleunigung, die Neigung des Geländes, die Maschinenlast und das Ausrollen, wiedergeben, und zum daraus erfolgenden Erzeugen der Solenoidbetriebssignale.

2. Automatisches Kraftübertragungssystem nach Anspruch 1, dadurch gekennzeichnet, daß die Schaltmuster, die im Speicher gespeichert sind, Geschwindigkeitsänderungsdaten (Figure 7a) einschließen, die zum Bewirken einer Maschinenbremsung mit wirtschaftlichem Kraftstoffverbrauch angemessen sind, wobei die Daten an Speicherplätzen gespeichert sind, die als Funktion der Maschinendrehzahl und der Maschinenlast adressierbar sind.

3. Automatisches Kraftübertragungssystem nach Anspruch 1 oder 2, dadurch gekennzeichnet, daß die Schaltmuster, die im Speicher gespeichert sind, Geschwindigkeitsänderungsdaten einschließen, die zum Bewirken einer Maschinenbremsung (Figure 7b) angemessen sind, wenn das Fahrzeug bis zu einem Halt abgebremst wird, wobei die Maschinenlastdaten an Speicherplätzen gespeichert sind, die als Funktion der Maschinenlast und der Maschinendrehzahl adressierbar sind.

4. Automatisches Kraftübertragungssystem nach Anspruch 1, 2 oder 3, dadurch gekennzeichnet, daß die Schaltmuster, die im Speicher gespeichert sind, Geschwindigkeitsänderungsdaten (Figure 7c) einschließen, die zum Bewirken einer Maschinenbremsung angemessen sind, wenn das Fahrzeug schnell abgebremst wird oder abwärts fährt, wobei die zuletzt genannten Maschinenlastdaten an Speicherplätzen gespeichert sind, die als Funktion der Maschinenlast und der Maschinendrehzahl adressierbar sind.

5. Automatisches Kraftübertragungssystem nach einem der vorhergehenden Ansprüche, dadurch gekennzeichnet, daß die Schaltmuster, die im Speicher gespeichert sind, Getriebeeinrückzeitintervalldaten (Figure 9d) einschließen, die zum Bewirken einer Maschinenbremsung unter hoher Fahrzeuglast und bei hoher Maschinendrehzahl angemessen sind, wobei die zuletzt genannten Daten an Speicherplätzen gespeichert sind, die als Funktion der Maschinendrehzahl und der Maschinenlast adressierbar sind.

0 038 083

FIG. 1

FIG. 2

1

0 038 083

FIG. 3

FIG. 4a

FIG. 4b

FIG. 5

2

## FIG. 6

## FIG. 7a

VEHICLE SPEED (V)

## FIG. 7b

VEHICLE SPEED (V)

## FIG. 7c

VEHICLE SPEED (V)

0 038 083

FIG. 8

FIG. 9a

FIG. 9b

4

## FIG. 10

## FIG. 11a

0 038 083

FIG. 11b

FIG. 11c

FIG. 11d

6

# FIG. 12

# FIG. 13

# FIG. 14

0 038 083

## FIG. 15

## FIG. 16

## FIG. 17

## FIG. 18

## FIG. 19

8

**FIG. 20**

**FIG. 21**

TO COMP 197 & TM 196